# EUROPÄISCHE PATENTANMELDUNG

(11) **EP 1 265 415 A1**
(43) Veröffentlichungstag der Anmeldung: **11.12.2002**
(21) Anmeldenummer: 01810550.2
(22) Anmeldetag: 07.06.2001
(51) Int. Cl.: H04L 29/06, H04L 12/26, H04L 12/24

(54) **Überwachungsmonitor für ein Netzwerk und Verfahren zum Netzwerkmonitoring**

(71) Anmelder: ABB RESEARCH LTD., 8050 Zürich (CH)
(72) Erfinder: Naedele, Martin, 8048 Zürich (CH)
(74) Vertreter: ABB Patent Attorneys

(57) **Zusammenfassung**

Die Erfindung ist gerichtet auf einen Überwachungsmonitor (1) für ein Netzwerk miteinander über Nachrichten kommunizierender Geräte (3), beispielsweise in Stromverteilungsunterwerken. Der Überwachungsmonitor weist auf: mit dem Netzwerk verbundene Eingangsmittel (4) zum Empfangen von im Netzwerk verschickten Nachrichten, einen Speicher (6) mit einem Regelwerk über legale und/oder illegale Nachrichten, einen Analysator (5) zum Überprüfen der Legalität der empfangenen Nachrichten anhand des Regelwerks, und Reaktionsmittel (7) zum Aktivieren einer Reaktion beim Feststellen einer illegalen Nachricht. Die Erfindung ist weiter gerichtet auf ein entsprechendes Verfahren zum Netzwerkmonitoring in einem Netzwerk von miteinander über Nachrichten kommunizierender Geräte (1).

## Beschreibung

### Technisches Gebiet der Erfindung

Die Erfindung betrifft einen Überwachungsmonitor für ein Netzwerk von miteinander über Nachrichten kommunizierenden Geräten sowie ein Verfahren zum Netzwerkmonitoring eines solchen Netzwerks.

### Stand der Technik

Elektrische beziehungsweise elektronische Geräte werden in komplexeren Systemen, wie beispielsweise Automatisierungssystemen zunehmend in Netzwerken verbunden. Die einzelnen, das System bildenden Geräte, sind also vermittels eines oder mehrerer Netzwerke, wie beispielsweise dem Fieldbus oder Ethernet-Netzwerken physikalisch und logisch verbunden, durch die sie mit logischen Unicast- oder Multicast-Nachrichten miteinander kommunizieren. Gerade im Bereich von Automatisierungssystemen wie beispielsweise Unterstationssystemen der Energieverteilungs- und - leittechnik bewirkt die dadurch mögliche Modularisierung der verwendeten Geräte ein rasches und kostengünstiges Zusammenstellen der gewünschten Systemfunktionalität. Die Hardware- und Softwarekonfiguration eines gegebenen Automatisierungssystems wird hierbei im allgemeinen als statisch angenommen, was bedeutet, daß sowohl die Geräte als auch die auf ihnen laufenden Applikationen mit den daraus resultierenden Kommunikationsflüssen schon während der Systemkonfigurationszeit bekannt sind.

In solchen miteinander vernetzten Gerätenetzwerken können Fehlfunktionen auftreten, die, beispielsweise durch externe Angriffe auf Geräte des Netzwerks oder durch Defekte bedingt, dazu führen können, daß im Netzwerk Nachrichten verschickt werden, die nicht kontextgerecht sind. Man spricht in solchen Fällen von illegalen Kommunikationsnachrichten. Abhängig von der Systemkonfiguration und der Kommunikationshistorie kann eine Nachricht beispielsweise als illegal angesehen werden, wenn
sie zwischen zwei Geräten stattfindet, welche nicht miteinander kommunizieren sollten;
wenn sie während einer unerwarteten Zeit auftritt; oder falls sie eine ungeplante Länge aufweist.

In Automatisierungssystemen wie Unterstationssystemen wird derzeit keinerlei Verifikation der Kommunikation, das heißt der in dem entsprechenden Netz versandten Nachrichten, vorgenommen. Es ist daher die Aufgabe der vorliegenden Erfindung, Mittel bereitzustellen, mittels derer illegale Nachrichten in Netzwerken kommunizierender Geräte entdeckt und gegebenenfalls eliminiert werden können.

### Darstellung der Erfindung

Diese Aufgabe wird gelöst durch die Bereitstellung eines Überwachungsmonitors gemäß dem unabhängigen Patentanspruch 1 sowie ein Verfahren zum Netzwerkmonitoring in einem Netzwerk gemäß dem unabhängigen Patentanspruch 18. Weitere vorteilhafte Ausgestaltungen, Aspekte und Details der Erfindung ergeben sich aus den abhängigen Patentansprüchen, der Beschreibung und den beigefügten Zeichnungen.

Die Erfindung ist zunächst gerichtet auf einen Überwachungsmonitor für ein Netzwerk miteinander über Nachrichten kommunizierender Geräte, welcher aufweist: mit dem Netzwerk verbundene Eingangsmittel zum Empfangen von im Netzwerk verschickten Nachrichten, einen Speicher mit einem Regelwerk über legale und/oder illegale Nachrichten, einen Analysator zum Überprüfen der Legalität der empfangenen Nachrichten an Hand des Regelwerks und Reaktionsmittel zum Aktivieren einer Reaktion beim Feststellen einer illegalen Nachricht.

Ein Überwachungsmonitor im Sinne der vorliegenden Erfindung ist ein elektronisches Gerät, dessen Komponenten und dessen gegebenenfalls vorhandene Programmierung es in die Lage versetzt Nachrichten, die auf dem Netzwerk gesendet werden, zu empfangen und zu prozessieren.

Das Netzwerk kann jegliches zur Vernetzung von Geräten verwendete Netzwerk wie Ethernet, Token Ring, Fieldbus oder andere Kommunikationsbusse sein. Die über Nachrichten kommunizierenden Geräte des Netzwerks können jegliche in Netzwerken kombinierbaren Geräte sein, wie beispielsweise Datenverarbeitungsanlagen, intelligente elektronische Geräte, Netzwerkkomponenten wie Router oder Bridges oder Peripheriekomponenten wie Drucker oder Faxgeräte. Der Überwachungsmonitor weist erfindungsgemäß ein Eingangsmittel zum Empfangen von im Netzwerk verschickte Nachrichten auf. Dieses Eingangsmittel kann entweder komplett in Hardware realisiert sein, beispielsweise als Schnittstelle; oder eine Kombination von Hardware und Software darstellen, die in der Lage sind Nachrichten zu empfangen und gegebenenfalls zu dekodieren. Das Eingangsmittel muß sich nicht in allen Fällen physikalisch am selben Ort wie der Rest des Überwachungsmonitors befinden, sondern kann ebenfalls über ein Netzwerk distribuiert sein (s. u.).

Kernstück der Erfindung ist das in einem Speicher gespeicherte Regelwerk, mit dessen Hilfe legale von illegalen Nachrichten unterschieden werden können. Hier werden an Hand abstrakter oder konkreterer Merkmale Festlegungen darüber getroffen, welche konkreten Nachrichten in einem Netzwerk auftreten dürfen oder welche nicht in diesem Netzwerk auftreten dürfen.

Das Überprüfen der Legalität der empfangenen Nachrichten erfolgt in einem Analysator unter Berücksichtigung des Regelwerks. Der Analysator kann beispielsweise eine Softwarekomponente oder allgemein ein Programmobjekt sein, welches auf einem im Überwachungsmonitor befindlichen Prozessor läuft. Der Analysator kann auch eine fest verdrahtete Einheit sein, welche in der Lage ist, den Speicher unmittelbar auszulesen und die Analyse der eingehenden Nachrichten durchzuführen. In der Praxis wird es zumeist bevorzugt werden, ein Programm zu verwenden, wenn auch eine Implementation z.B. mittels eines ASIC gerade bei Netzwerken mit großen Datenmengen Geschwindigkeitsvorteile mit sich bringen kann.

Der Analysator vergleicht empfangene Nachrichten mit den Prototypnachrichten des Regelwerks, wobei gegebenenfalls an den eingegangenen Nachrichten Abstraktionen vorgenommen werden können oder müssen, um diese mit den abstrakter formulierten Regeln vergleichen zu können.

Um schließlich eine Außenwirkung des Überwachungsmonitors entfalten zu können, sind Reaktionsmittel vorgesehen, welche vom Analysator über das Vorliegen einer illegalen Nachricht informiert werden und welche daraufhin eine Reaktion auslösen.

Das erfindungsgemäße Regelwerk kann vorzugsweise Regeln über die Legalität der Nachrichten enthalten, welche ausgewählt sind aus:
einem Sender und einem oder mehreren geplanten Empfängern der Nachricht; einer Paarung aus einem Sender und zumindest einem korrekten Empfänger; einem Zeitpunkt der Nachricht; einer Laufzeit der Nachricht bis zum Eintreffen beim Überwachungsmonitor; einer Frequenz der Nachricht bei periodisch versendeten Nachrichten; einer Minimallänge der Nachricht; einer Maximallänge der Nachricht; einem zu bestimmten Empfänger passenden Inhalt der Nachricht; einem Nachrichtentyp; sowie Kombinationen davon.

Sender oder Empfänger der Nachricht können dann illegal sein, wenn nicht erwartet werden kann, daß diese Komponenten im Netz vorhanden sind oder zu einem bestimmten Zeitpunkt vorhanden sind. Die Überprüfung der Paarung von Sender und Empfänger kann dazu dienen, solche Nachrichten heraus zu filtern, die an den falschen Empfänger adressiert sind.

Nachrichten können zu Zeitpunkten verschickt werden, zu denen sie eigentlich nicht verschickt werden durften, beispielsweise wenn ein im Netzwerk befindliches Gerät nur zu einem bestimmten Zeitpunkt, beispielsweise periodisch Nachrichten abschickt. Daher ist auch die Überwachung dieser Fehlerquelle vorteilhaft.

Gerade in komplexen Netzwerken kann es vorkommen, daß Nachrichten eine längere Laufzeit haben, da sie mehrfach umgesetzt werden müssen. Hier kann es wichtig sein, die Laufzeit einer Nachricht zu überprüfen, um beispielsweise feststellen zu können, ob diese überhaupt noch aktuell sein kann, und ob gegebenenfalls intermittierend auftretende Störungen im Netzwerk vorliegen können.

Ähnlich wie der Zeitpunkt der Nachricht kann auch die Frequenz der Nachricht überwacht werden, um beispielsweise die freie Funktionsfähigkeit eines Geräts, das in periodischen Abständen Nachrichten sendet, zu überprüfen.

Minimal- und Maximallänge der Nachrichten können festgelegt werden, bei deren Unter- oder Überschreiten anzunehmen ist, daß die Nachricht eine falsche Information enthält oder sonstige Fehler aufweist.

Schließlich kann auch der Inhalt der Nachricht überprüft werden, beispielsweise bezüglich einer Passung mit einem Empfänger dieser Nachricht. Auf diese Weise können fehl adressierte Nachrichten aufgefunden werden.

Auch Nachrichtentypen, die grundsätzlich oder in Kombination mit anderen Merkmalen wie einem Zeitpunkt nicht auftreten sollten, könnten eine Fehlerquelle erkennen lassen und können daher aufgefunden werden. Die vorstehende Aufzählung ist keinesfalls als vollständig anzusehen, vielmehr sind jederzeit weitere Kenngrößen vorstellbar, nach denen die Nachrichten überprüft werden können, beispielsweise eine Identifikationsnummer einer Nachricht.

Um die Arbeitsgeschwindigkeit des erfindungsgemäßen Überwachungsmonitors zu optimieren, sollte das Regelwerk im Speicher in einer effizienten Datenstruktur hinterlegt sein, welche einen raschen Zugriff und ein schnelles Nachschlagen von Inhalten ermöglicht. So kann das Regelwerk beispielsweise in Form einer logischen Baumstruktur gespeichert sein, deren Äste jeweils Entscheidungen an Hand von vorgegebenen Kriterien ermöglichen, um auf diese Weise rasch unbrauchbare Bereiche des Regelwerks auszuklammern.

Alternativ kann das Regelwerk beispielsweise in Form einer Hash-Tabelle gespeichert sein, welche ebenfalls einen raschen Zugriff auf Informationen ermöglicht. Eine solche Hash-Tabelle kann beispielsweise ausgestattet sein mit Informationen über den Sender, den Empfänger, einen Nachrichtenidentifikator oder jegliche Kombination dieser Daten als Stütze für die Hash-Tabelle.

Es wird weiterhin bevorzugt, daß der Speicher ein persistenter Speicher ist. Dies ermöglicht das Speichern der Informationen des Regelwerks auch bei Stromausfällen oder vorübergehendem Betriebsstillstand des erfindungsgemäßen Netzwerkmonitors. Ein solcher persistenter Speicher kann beispielsweise eine Festplatte oder ein EEPROM, ein Flash-RAM oder ein vergleichbares Medium sein. Um eine leichte Wartbarkeit des Netzwerkmonitors vor Ort zu ermöglichen, kann beispielsweise als Speicher ein Diskettenlaufwerk oder, falls wenige Änderungen zu erwarten sind, auch ein CD-Rom-Laufwerk Verwendung finden.

Vorzugsweise ist das Netzwerk und/oder die Eingangsmittel so ausgelegt, daß alle im Netzwerk versendeten Nachrichten überprüft werden können. Je nach Konfiguration des Netzwerks kann es auf Schwierigkeiten stoßen, sämtliche Nachrichten dem Netzwerkmonitor zukommen zu lassen. Es kann daher in bestimmten Konfigurationen so sein, daß der Netzwerkmonitor nur einen bestimmten Bereich des Gesamtnetzwerks überprüfen kann. Bevorzugt wird jedoch, wenn ein Netzwerkmonitor sämtliche Nachrichten eines Netzwerks überwachen kann, um einen vollständigen Überblick zu erhalten. Daher sollte das Netzwerk oder die Eingangsmittel oder eine Kombination davon entsprechend ausgelegt sein. Im Falle eines beispielhaft angeführten einfachen Ethernets, bei dem alle Geräte miteinander kommunizieren können, ist es ausreichend, die Eingangsmittel, beispielsweise eine Ethernet-Schnittstelle, so auszulegen, daß diese den Promiscuous-Mode von Ethernet beherrschen, um alle Nachrichten zu empfangen. Bei komplexer aufgebauten Netzwerken, beispielsweise Switched-Ethernet-Netzwerken, die aus mehreren Segmenten bestehen (auch beispielsweise mit Bridges verbunden), werden Nachrichten von den verschiedenen Infrastrukturen des Netzwerks nur in die Segmente weitergeleitet, in denen der Adressat einer Nachricht angesiedelt ist. In diesem Fall kann es notwendig sein, die Eingangsmittel des erfindungsgemäßen Netzwerks unmittelbar mit allen Brücken (Bridges) oder mit allen Switches eines Ethernets zu verbinden, um alle Nachrichten abhören zu können. Dem Fachmann sind entsprechende Verschaltungen geläufig, die einen solchen Anschluß ermöglichen.

Im Falle der Verwendung von Switched-Ethernet kann es weiterhin notwendig sein, den Switch, mit dem der Netzwerkmonitor verbunden ist, so zu konfigurieren, daß er alle an den Switch gegangenen Nachrichten zugleich auch an den Ausgang des Netzwerkmonitors ausgibt. Die verwendete Netzwerktechnik beziehungsweise Topologie ist jedoch nicht auf Ethernet beschränkt. Vielmehr kann das vom Überwachungsmonitor überwachte Netzwerk ein Ethernet-Netzwerk, ein Token-Ring-Netzwerk, ein Blue-Tooth-Netzwerk, ein Fieldbus-Netzwerk, ein Haustechnik-Netzwerk oder ein ATM-Netzwerk sein. Je nach verwendeter Basistechnologie ist auch das Eingangsmittel des Netzwerkmonitors an die technischen Gegebenheiten anzupassen.

Erfindungsgemäß ist ein Reaktionsmittel vorgesehen, um eine externe Reaktion auslösen zu können, falls eine illegale Nachricht aufgefunden wird. Ein solches Reaktionsmittel kann in einem einfachen Fall ein Alarmgeber sein, der einen Alarmzustand des Überwachungsmonitors signalisiert. Ein solcher Alarm kann in einfachen Fällen ein optisches oder akustisches Signal sein, kann jedoch auch in dem Verschicken einer Nachricht, beispielsweise ein Wartungspersonal, über SMS, Fax oder Email bestehen.

Das Reaktionsmittel kann weiterhin einen Nachrichtengenerator aufweisen, der dazu dient, Steuernachrichten an die Sender illegaler Nachrichten zu versenden, wobei die Steuernachrichten den Sender über die illegale Nachricht informieren und/oder ihn entsprechend konfigurieren können.

Schließlich kann das Reaktionsmittel auch ein Blockmittel aufweisen, mit dem der weitere Versand der illegalen Nachrichten verhindert werden kann.

Das Aussenden illegaler Nachrichten durch einen im Netzwerk befindlichen Nachrichtensender kann unter Umständen darauf hinweisen, daß zumindest der Netzwerk-Ausgang des Nachrichtensenders eine Fehlfunktion aufweist.

Da der Ausgang bei Netzwerken häufig physikalisch und logisch in einem integrierten Element mit dem Eingang ausgeführt ist, kann mithin eine illegale Nachricht darauf hindeuten, daß das Gerät nicht mehr empfangsbereit ist. Es ist daher insbesondere bevorzugt, daß das Reaktionsmittel über einen weiteren vom zu überwachenden Netzwerk unabhängigen Kanal zur Verbindung von Abnehmern von Reaktionen verbunden ist. Auf diese Weise können blockierte Geräte noch erreicht werden. Es ist jedoch genauso möglich, falls das gesamte Netzwerk aus irgendwelchen Gründen blockiert ist, noch ein Alarmsignal abzugeben. Diese sogenannte Out-of-Band-Kommunikation verbessert daher die Betriebssicherheit des erfindungsgemäßen Überwachungsmonitors.

Das Reaktionsmittel kann auch einen Generator für Einträge in eine Logliste aufweisen. Ein solcher Generator kann beispielsweise ein Programmodul sein, das mit dem Analysator interagiert und Informationen über die Nachricht, wie beispielsweise die Nachricht selbst oder den Zeitpunkt des Eingangs der Nachricht, in einer Logliste festhält, die dann von Wartungspersonal entweder direkt am Überwachungsmonitor oder über das zu überwachende oder das weitere Netzwerk ausgelesen werden kann.

Wie bereits ausgeführt, kann der erfindungsgemäße Überwachungsmonitor in verschiedenen Implementationen ausgeführt sein. Es wird üblicherweise allerdings bevorzugt sein, den Überwachungsmonitor in einer Datenverarbeitungsanlage zu realisieren, beispielsweise einem Personal Computer oder eine Unix-Workstation, wobei dann die Eingangsmittel eine Netzwerkverbindung der Datenverarbeitungsanlage sind, also beispielsweise eine Netzwerkkarte inklusive der dazugehörigen Treibersoftware, und Speicherregelwerk, Analysator und/oder Reaktionsmittel jeweils logisch als Software innerhalb der Datenverarbeitungsanlage ausgeführt sind.

Bevorzugt ist das überwachte Netzwerk, mit dem der Überwachungsmonitor verbunden ist, ein Automatisierungssystem, beispielsweise ein Elektrizitätsverteilungssystem wie eine Elektrizitätsverteilungsstation oder ein Netzwerk von Elektrizitätsverteilungsstationen (sogenannten Unterwerken).

Die Erfindung ist weiterhin auf ein Verfahren zum Netzwerkmonitoring gerichtet, das in einem Netzwerk von miteinander über Nachrichten kommunizierender Geräte ausgeführt wird. Alles bezüglich des erfindungsgemäßen Überwachungsmonitors Gesagte gilt gleichermaßen auch für das erfindungsgemäße Verfahren, so daß auf das obige vollinhaltlich Bezug genommen und verwiesen wird. Das erfindungsgemäße Verfahren weist folgende Schritte auf:
Empfangen einer im Netzwerk versandten Nachricht durch ein Eingangsmittel;
Überprüfen der Legalität der empfangenen Nachrichten an Hand eines Regelwerks über legale und/oder illegale Nachrichten in einem Analysator; und
Reagieren beim Auffinden einer illegalen Nachricht.

In der Praxis wird dieses Verfahren als Endlosschleife ausgelegt sein, so daß beliebig viele Nachrichten empfangen und verarbeitet werden können.

Das Überprüfen der Legalität der empfangenen Nachricht kann vorzugsweise folgende Schritte aufweisen:
Parsen der Nachricht zum Auffinden von Nachrichtenelementen, die relevant für die Überprüfung der Legalität sind; Vergleichen der Nachrichtenelemente mit Elementen in den Regeln des Regelwerks;
bei Übereinstimmung der Nachrichtenelemente mit den Elementen einer Regel für eine legale Nachricht, Feststellen der Legalität der Nachricht, andernfalls Feststellen der Illegalität der Nachricht; und/oder
bei Übereinstimmung der Nachrichtenelemente mit den Elementen einer Regel für eine illegale Nachricht Feststellen der Illegalität der Nachricht, andernfalls Feststellen der Legalität der Nachricht.

Ein Kernelement dieses Verfahrensschrittes ist mithin das Auffinden und Vergleichen von Elementen in einer empfangenen Nachricht mit Elementen, die sich im Regelwerk für eine Regel finden. Die Nachrichtenelemente werden hierbei als Schlüssel verwendet, mit denen das Regelwerk abgefragt werden kann. Im allgemeinen werden die Regeln im Regelwerk in einer abstrakteren Form niedergelegt sein als die Nachrichtenelemente einer konkret empfangenen Nachricht. Es ist daher notwendig, entweder die konkret empfangenen Nachrichtenelemente zu abstrahieren oder die Regeln in bezug auf ein konkretes Nachrichtenelement zu konkretisieren. In den Regeln können beispielsweise Wertebereiche für bestimmte Schlüssel, wie beispielsweise Adressen von Sendern und/oder Empfängern, festgelegt sein, bei denen mit Hilfe üblicher Vergleichsalgorithmen festgestellt werden kann, ob eine Sender- oder Empfängerangabe in einer empfangenen Nachricht in diesen Wertebereich hineinfällt. Auch kann es notwendig sein, den Inhalt der Nachricht zu analysieren, um ihn einem bestimmten Nachrichtentyp zuordnen zu können, für den weitere Regeln im Regelwerk enthalten sind oder eben nicht.

Das erfindungsgemäße Verfahren zeigt in dieser konkreteren Ausführungsform zwei verschiedene Möglichkeiten, das Problem anzugehen, welche alternativ oder auch gleichzeitig verwendet werden können. Dies ist zum einen das Suchen nach legalen Nachrichten im Regelwerk, welches schließlich Informationen über legale Nachrichten enthält und andererseits das Suchen nach illegalen Nachrichten in einem Regelwerk, das Informationen über illegale Nachrichten enthält.

Im ersteren Fall wird also eine Nachricht dann für illegal gehalten, wenn sie keine der Regeln des Regelwerks erfüllt, im letzteren Fall wird sie bei Nichterfüllen für legal gehalten. Welches der beiden möglichen Verfahren oder ob eine Kombination beider Verfahren gewählt wird, hängt von der konkreten Implementierung, insbesondere der erwarteten Häufigkeit illegaler Nachrichten ab. Wie bereits bezüglich des erfindungsgemäßen Überwachungsmonitors ausgeführt, können die Regeln über die Legalität von Nachrichten ausgewählt sein aus einem Sender und einem oder mehreren geplanten Empfängern der Nachricht; einer Paarung aus einem Sender und zumindest einem korrekten Empfänger; einem Zeitpunkt der Nachricht; einer Laufzeit der Nachricht bis zum Eintreffen beim Überwachungsmonitor; einer Frequenz der Nachricht bei periodisch versendeten Nachrichten; einer Minimallänge der Nachricht; einer Maximallänge der Nachricht; einem zu bestimmten Empfängern passenden Inhalt der Nachricht; einem Nachrichtentyp; sowie Kombinationen davon.

Das Verfahren ist weiterhin dadurch vorzugsweise gekennzeichnet, daß alle im Netzwerk versandten Nachrichten überprüft werden.

Das Reagieren kann das Auslösen eines Alarms beinhalten, aber auch das Versenden von Steuernachrichten an einen Sender illegaler Nachrichten, wobei die Steuernachrichten den Sender über die illegale Nachricht informieren und/oder ihn entsprechend konfigurieren können.

Weiterhin kann das Reagieren das Eintragen einer entsprechenden Information über die illegale Information in einer Logdatei beinhalten. Bezüglich der bevorzugten Ausführungsform des Verfahrens wird auf die entsprechende Beschreibung bei der Darstellung des erfindungsgemäßen Überwachungsmonitors verwiesen.

Weiterhin kann es in einer Ausführungsform der vorliegenden Erfindung bevorzugt sein, das Regelwerk dynamisch verändern zu können. Hierunter ist zu verstehen, daß Regeln hinzugefügt, gelöscht oder modifiziert werden können, während das Verfahren durchgeführt wird, beziehungsweise der Überwachungsmonitor in Betrieb ist, beziehungsweise während das Netzwerk operational ist. Durch diese bevorzugte Ausführungsform ist es möglich, das Regelwerk an eine sich verändernde Netzwerkumgebung anzupassen. Solche Regeländerungen können entweder durch Wartungspersonal durchgeführt werden, welches nach Installation neuer Komponenten oder Entfernung alter Komponenten des Regelnetzwerks ein entsprechendes Update des Regelwerks durchführt; es ist jedoch auch möglich, daß die Änderungen des Regelwerks automatisch durchgeführt werden, indem beispielsweise neu in einem Netzwerk auftauchende Geräte eine Information über von ihnen zu erwartende legale Nachrichten an den Überwachungsmonitor übersenden. Wenn ein Gerät vom Netz entfernt wird, kann es desgleichen einen Meldeprozeß geben, bei dem das Gerät dem Netzwerkmonitor mitteilt, daß es in Zukunft keine Nachrichten mehr senden wird.

Bevorzugterweise kann das erfindungsgemäße Verfahren mit einem der erfindungsgemäßen Überwachungsmonitore durchgeführt werden.

### Kurze Beschreibung der Zeichnungen

Figur 1 zeigt eine Netzwerktopologie in einem switched Ethernet mit angeschlossenem Überwachungsmonitor;
Figur 2 zeigt eine Ethernet Bustopologie mit angeschlossenem Überwachungsmonitor; und
Figur 3 zeigt den schematischen Aufbau eines erfindungsgemäßen Überwachungsmonitors.

### Wege zur Ausführung der Erfindung

Im Folgenden soll die Erfindung an Hand konkreter Ausführungsbeispiele näher erläutert werden, wobei auf die beigefügten Zeichnungen Bezug genommen werden wird.

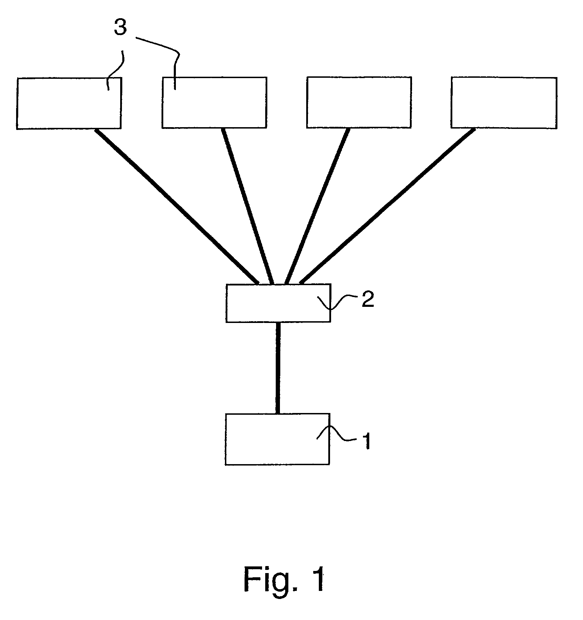

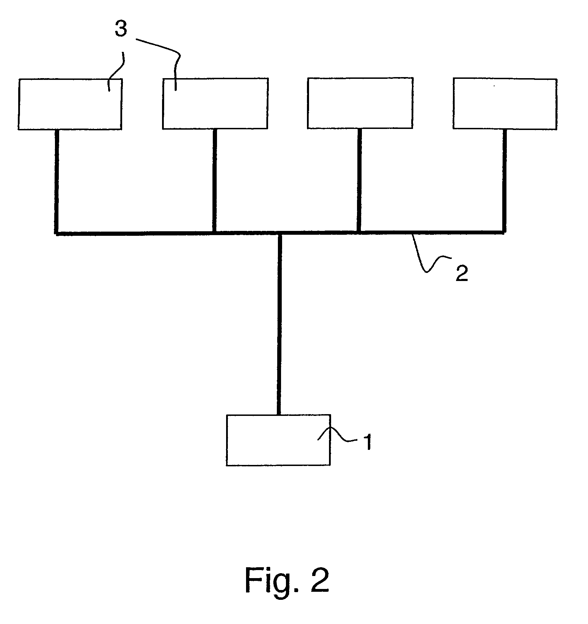

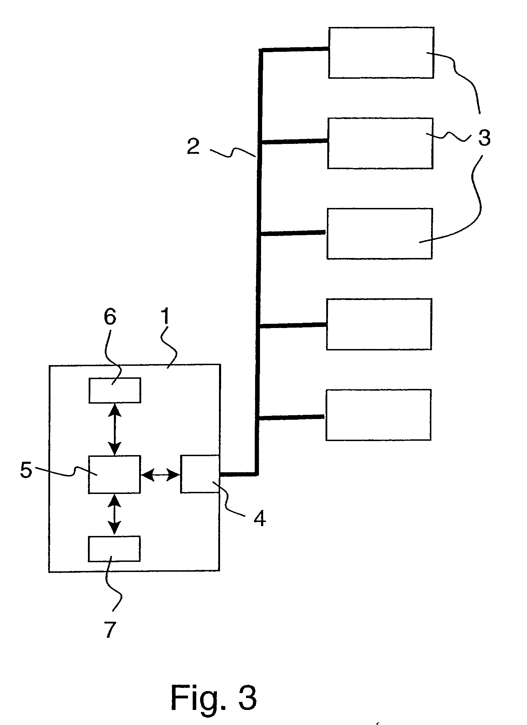

Der erfindungsgemäße Netzwerküberwachungsmonitor ist ein Hardwaregerät, das in der Lage ist, auf dem Netzwerk gesendete Nachrichten zu empfangen und zu prozessieren. Es ist mit dem Netzwerk verbunden, so daß es alle Nachrichten, die über den Bus des Netzwerks gesendet werden, empfangen kann. In einem Ethernet-Kommunikationssystem könnte dieser Netzwerkmonitor beispielsweise ein PC mit einer Ethernetkarte sein, die in den Promiscuous-Mode gesetzt ist und die entweder direkt mit dem Ethernet-Netzwerk (bei Cheapernet) oder mit einem Port eines Hubs oder eines Switchs verbunden ist, der so konfiguriert ist, daß er alle Nachrichten jeden Geräts im Netzwerk empfängt. Ein Beispiel für ein entsprechend konfiguriertes Netzwerk zeigt Figur 1, in der angeschlossene Geräte 3 über einen Switch 2 miteinander kommunizieren (Sterntopologie). Am Switch angeschlossen ist auch der erfindungsgemäße Netzwerkmonitor 1. Fig. 2 zeigt ein weiteres Beispiel einer Netzwerktopolgie, bei der alle Einheiten über einen Bus unmittelbar miteinander verbunden sein. Insbesondere in Umgebungen, in denen viele Nachrichten und hohe Datenraten auftreten, kann der erfindungsgemäße Überwachungsmonitor alternativ auch ein speziell ausgelegter Computer sein. Wie in Figur 3 gezeigt, kann der Netzwerkmonitor 1 über ein entsprechendes Netzwerk respektive einen Bus 2 mit den Geräten 3 verbunden sein, wozu ein Eingangsmittel 4 dient. Im erfindungsgemäßen Netzwerkmonitor sind weiterhin ein Analysator 5 zum Analysieren eingehender Nachrichten und ein Speicher 6 zum Speichern des Regelwerks implementiert. Reaktionsmittel 7 können dann eine Reaktion auslösen, wenn der Analysator 5 eine illegale Nachricht festgestellt hat. Bei Anwendung auf Automatisierungssysteme kann es im allgemeinen klar bestimmt werden, welche angeschlossenen Geräte kommunizieren müssen. In vielen Fällen wird es sogar möglich sein, den erwarteten Netzverkehr sogar besser in bezug auf Nachrichtenlänge und Nachrichtensequenzen zu beschreiben. Bezüglich des Beispiels der Automatisierungssysteme gibt die folgende Tabelle eine Möglichkeit des Bildens eines Regelwerks an.

**Tabelle**

| Quelle | Ziel | Nachrichtenrate | Nachrichtengröße |
|---|---|---|---|
| Spannungssensor 1 | Abstandsschutz | 1/ms | ein Paket |
| Stromsensor 1 | Abstandsschutz | 1/ms | ein Paket |
| Abstandsschutz | Schaltungsunterbrecher | Unspezifiziert | ein Paket |

Das Regelwerk des erlaubten und nicht erlaubten Verkehrs im Netzwerk wird beispielsweise dadurch erreichbar sein, daß ein spezielles Konfigurationsgerät, beispielsweise ein Laptop, mit dem erfindungsgemäßen Überwachungsmonitor verbunden wird, oder indem ein Eingabeprogramm verwendet wird, das mit einem speziellen Administrationsnetzwerk verbunden ist, welches wiederum mit dem Überwachungsmonitor verbunden ist, oder indem ein Eingabeprogramm, das mit dem überwachten Netzwerk verbunden ist, verwendet wird, wobei State-of-the-Art-Zugangskontrolltechniken verwendet werden können. Durch eine dieser möglichen Methoden wird das geplante Regelwerk in den Überwachungsmonitor übertragen. Alle empfangenen Nachrichten werden mit diesen vordefinierten Regeln verglichen. Eine Nachricht, für die keine Regel gefunden wird, wird als illegal angenommen. Hierbei ist es auch möglich, daß die Auffindungsmethodik ebenfalls den Status des Netzwerks, beispielsweise vorhergehende Nachrichten mit berücksichtigt. Verschiedene Algorithmen eines Feststellens der Passung von Nachricht und Regel sind möglich, beispielsweise können die Regeln für erlaubte Nachrichten in Form eines Baums mit abzweigenden Niveaus gemäß den Regelattributen ausgelegt sein, beispielsweise Sender, Empfänger, Größe, Grad etc. Regeln für illegale Nachrichten können in Form eines gleichen Baums gespeichert werden. Dies kann nützlich sein, falls es einfacher ist, eine übermäßig illegale Kommunikation zu definieren als erlaubte Kommunikation. Weiterhin kann jeder erlaubte Nachrichtentyp einen eindeutigen Identifizierer haben, der gemeinsam mit der Nachricht übertragen wird. Dieser Identifizierer ist ein Look-up-Schlüssel für die entsprechende Regel, welche dann mit den tatsächlichen Nachrichtenattributen verglichen wird. Dies stellt einen sehr effizienten Algorithmus zur Lösung des Problems dar.

Im folgenden soll zusammenfassend ein Ausführungsbeispiel für das erfindungsgemäße Verfahren angegeben werden.
1. Eine im Netzwerk gesandte Nachricht wird von den Eingangsmitteln 4 des erfindungsgemäßen Überwachungsmonitors 1 empfangen.
2. Der Überwachungsmonitor 1 parst die Nachricht, um die Teile zu finden, welche als Identifikationsschlüssel für die anzuwendenden Regeln verwendet werden, beispielsweise die Senderadresse, die Empfängeradresse, Nachrichtenidentifikationsnummer oder der derzeitige Status der Zustandsmaschine.
3. Der Überwachungsmonitor 1 lokalisiert die relevanten Regeln in dem Regelwerk.
4. Falls die gefundene Regel zusätzliche Einschränkungen definiert, beispielsweise eine maximale Nachrichtengröße, eine minimale Nachrichtengröße, eine maximale oder minimale Zeit zwischen zusammengehörigen Nachrichten, oder die Übereinstimmung mit einem bestimmten Verhalten, wie sie durch die Zustandsmaschine definiert wird.
4a. Der Überwachungsmonitor 1 parst die Nachricht, um relevante Datenelemente für die Evaluierung der Einschränkungen zu finden.
4b. Es evaluiert die Einschränkungen.
5. Basierend auf den Regeln, den Einschränkungen und den Elementen in der Nachricht, wird die Nachricht als legal oder illegal festgestellt.
5a. Falls die Nachricht illegal ist, werden die Maßnahmen ergriffen, beispielsweise wird ein Logbucheintrag vorgenommen, ein Alarm ausgelöst oder falls Netzwerkkonfigurationen und Topologie dies erlauben, wird die Nachricht blockiert.
6. Der Zustand des Überwachungsmonitors 1 wird aufgefrischt, beispielsweise bezüglich der Zustandsmaschinen-Transition und einem Timerrücksetzen.

### Bezugszeichenliste

- 1: Netzwerkmonitor
- 2: Netzwerkstruktur (Switch, Bus)
- 3: Netzwerkgerät
- 4: Eingangsmittel
- 5: Analysator
- 6: Speicher
- 7: Reaktionsmittel

## Patentansprüche

1. Überwachungsmonitor (1) für ein Netzwerk miteinander über Nachrichten kommunizierender Geräte (3), aufweisend
mit dem Netzwerk verbundene Eingangsmittel (4) zum Empfangen von im Netzwerk verschickten Nachrichten,
einen Speicher (6) mit einem Regelwerk über legale und/oder illegale Nachrichten,
einen Analysator (5) zum Überprüfen der Legalität der empfangenen Nachrichten anhand des Regelwerks, und
Reaktionsmittel (7) zum Aktivieren einer Reaktion beim Feststellen einer illegalen Nachricht.

2. Überwachungsmonitor (1) nach Anspruch 1, **dadurch gekennzeichnet, daß** das Regelwerk Regeln über die Legalität der Nachrichten enthält, die ausgewählt sind aus:
einem Sender und einem oder mehreren geplanten Empfängern der Nachricht; einer Paarung aus einem Sender und zumindest einem korrekten Empfänger, einem Zeitpunkt der Nachricht, einer Laufzeit der Nachricht bis zum Eintreffen beim Überwachungsmonitor; einer Frequenz der Nachricht bei periodisch versendeten Nachrichten; einer Minimallänge der Nachricht, einer Maximallänge der Nachricht, einem zu einem bestimmten Empfänger passenden Inhalt der Nachricht, einem Nachrichtentyp, sowie Kombinationen davon.

3. Überwachungsmonitor (1) nach Anspruch 1 oder 2, **dadurch gekennzeichnet, daß** das Regelwerk in Form einer logischen Baumstruktur gespeichert ist.

4. Überwachungsmonitor (1) nach Anspruch 1 oder 2, **dadurch gekennzeichnet, daß** das Regelwerk in Form einer Hashtable gespeichert ist.

5. Überwachungsmonitor (1) nach einem der Ansprüche 1 bis 4, **dadurch gekennzeichnet, daß** der Speicher (6) ein persistenter Speicher ist.

6. Überwachungsmonitor (1) nach einem der Ansprüche 1 bis 5, **dadurch gekennzeichnet, daß** das von ihm überwachte Netzwerk ein Ethernet-, ein Token-Ring-, ein Bluetooth-, ein Fieldbus-, ein Haustechnik- oder ATM-Netzwerk ist.

7. Überwachungsmonitor nach einem der Ansprüche 1 bis 6, **dadurch gekennzeichnet, daß** das Netzwerk und/oder die Eingangsmittel (4) so ausgelegt sind, daß alle im Netzwerk versendeten Nachrichten überprüft werden können.

8. Überwachungsmonitor (1) nach Anspruch 7, **dadurch gekennzeichnet, daß** das von ihm überwachte Netzwerk ein Ethernet ist und die Eingangsmittel (4) im "promiscuous mode" von Ethernet betrieben sind.

9. Überwachungsmonitor (1) nach einem der Ansprüche 1 bis 7, **dadurch gekennzeichnet, daß** das von ihm überwachte Netzwerk aus mehreren Segmenten besteht und die Eingangsmittel mit allen Brücken zwischen den Segmenten verbunden sind.

10. Überwachungsmonitor (1) nach einem der Ansprüche 1 bis 9, **dadurch gekennzeichnet, daß** das von ihm überwachte Netzwerk ein switched Ethernet ist und der zumindest eine verwendete Switch alle Nachrichten über einen Ausgang an die Eingangsmittel sendet.

11. Überwachungsmonitor (1) nach einem der Ansprüche 1 bis 10, **dadurch gekennzeichnet, daß** das Reaktionsmittel (7) einen Alarmgeber aufweist.

12. Überwachungsmonitor (1) nach einem der Ansprüche 1 bis 11, **dadurch gekennzeichnet, daß** das Reaktionsmittel (7) ein Nachrichtengenerator zum Versenden von Steuer-Nachrichten an die Sender illegaler Nachrichten aufweist, wobei die Steuernachrichten den Sender über die illegale Nachricht informieren und/oder ihn entsprechend konfigurieren können und/oder das Reaktionsmittel ein Blockmittel aufweist, mit dem der weitere Versand der illegalen Nachricht verhindert werden kann.

13. Überwachungsmonitor (1) nach Anspruch 11 oder 12, **dadurch gekennzeichnet, daß** das Reaktionsmittel über einen weiteren, vom zu überwachenden Netzwerk unabhängigen Kanal zur Verbindung mit Abnehmern von Reaktionen verbunden ist.

14. Überwachungsmonitor (1) nach einem der Ansprüche 1 bis 13, **dadurch gekennzeichnet, daß** das Reaktionsmittel (7) einen Generator für Einträge in eine Logliste aufweist.

15. Überwachungsmonitor (1) nach einem der Ansprüche 1 bis 14, **dadurch gekennzeichnet, daß** der Überwachungsmonitor (1) in einer Datenverarbeitungsanlage realisiert ist, wobei die Eingangsmittel eine Netzwerkverbindung der Datenverarbeitungsanlage ist und Speicher (6), Regelwerk, Analysator (5) und/oder Reaktionsmittel (7) als Software ausgeführt sind.

16. Überwachungsmonitor (1) nach einem der Ansprüche 1 bis 15, **dadurch gekennzeichnet, daß** das Netzwerk, mit dem der Überwachungsmonitor verbunden ist, ein Automatisierungssystem ist.

17. Überwachungsmonitor (1) nach Anspruch 16, **dadurch gekennzeichnet, daß** das Automatisierungssystem eine Elektrizitätsverteilungsstation oder ein Netzwerk von Elektrizitätsverteilungsstationen ist.

18. Verfahren zum Netzwerkmonitoring in einem Netzwerk von miteinander über Nachrichten kommunizierenden Geräten (3) mit folgenden Schritten:
- Empfangen einer im Netzwerk versandten Nachricht durch ein Eingangsmittel (4);
- Überprüfen der Legalität der empfangenen Nachricht anhand eines Regelwerks über legale und/oder illegale Nachrichten in einem Analysator (5); und
- Reagieren beim Auffinden einer illegalen Nachricht.

19. Verfahren nach Anspruch 18, **dadurch gekennzeichnet, daß** das Überprüfen der Legalität der empfangenen Nachricht folgenden Schritte aufweist:
- Parsen der Nachricht zum Auffinden von Nachrichtenelementen, die relevant für die Überprüfung der Legalität sind;
- Vergleichen der Nachrichtenelemente mit Elementen in den Regeln des Regelwerks;
- bei Übereinstimmung der Nachrichtenelemente mit den Elementen einer Regel für eine legale Nachricht, Feststellen der Legalität der Nachricht; andernfalls Feststellen der Illegalität der Nachricht; und/oder
- bei Übereinstimmung der Nachrichtenelemente mit den Elementen einer Regel für eine illegale Nachricht, Feststellen der Illegalität der Nachricht; andernfalls Feststellen der Legalität der Nachricht.

20. Verfahren nach Anspruch 18 oder 19, **dadurch gekennzeichnet, daß** das Regelwerk Regeln über die Legalität der Nachrichten enthält, die ausgewählt sind aus:
einem Sender und einem oder mehreren geplanten Empfängern der Nachricht; einer Paarung aus einem Sender und zumindest einem korrekten Empfänger, einem Zeitpunkt der Nachricht, einer Laufzeit der Nachricht bis zum Eintreffen bei einer das Verfahren durchführenden Entität; einer Frequenz der Nachricht bei periodisch versendeten Nachrichten; einer Minimallänge der Nachricht, einer Maximallänge der Nachricht, einem zu einem bestimmten Empfänger passenden Inhalt der Nachricht, einem Nachrichtentyp, sowie Kombinationen davon.

21. Verfahren nach einem der Ansprüche 18 bis 20, **dadurch gekennzeichnet, daß** alle im Netzwerk versandten Nachrichten überprüft werden.

22. Verfahren nach einem der Ansprüche 18 bis 21, **dadurch gekennzeichnet, daß** das Reagieren das Auslösen eines Alarms beinhaltet.

23. Verfahren nach einem der Ansprüche 18 bis 22, **dadurch gekennzeichnet**, das Reagieren das Versenden von Steuernachrichten an einen Sender illegaler Nachrichten beinhaltet, wobei die Steuernachrichten den Sender über die illegale Nachricht informieren und/oder ihn entsprechend konfigurieren können.

24. Verfahren nach einem der Ansprüche 18 bis 23, **dadurch gekennzeichnet, daß** das Reagieren das Eintragen einer entsprechenden Information über die illegale Nachricht in einer Logdatei beinhaltet.

25. Verfahren nach einem der Ansprüche 18 bis 24, **dadurch gekennzeichnet, daß** das Regelwerk dynamisch geändert werden kann.

26. Verfahren nach einem der Ansprüche 18 bis 25, **dadurch gekennzeichnet, daß** das Verfahren mit einem Überwachungsmonitor nach einem der Ansprüche 1 bis 14 durchgeführt wird.
